(19) Europäisches Patentamt
European Patent Office
Office européen des brevets

(11) Publication number: **0 463 023 B1**

(12) **EUROPEAN PATENT SPECIFICATION**

(45) Date of publication of patent specification: **26.10.94**

(51) Int. Cl.5: **F01L 1/34**, F16H 35/08, F16D 3/10

(21) Application number: **90904384.6**

(22) Date of filing: **07.03.90**

(86) International application number:
**PCT/GB90/00347**

(87) International publication number:
**WO 90/10788 (20.09.90 90/22)**

(54) **PHASE CHANGE MECHANISM.**

(30) Priority: **15.03.89 GB 8905944**
**16.03.89 GB 8906042**
**23.03.89 GB 8906770**
**19.12.89 GB 8928673**

(43) Date of publication of application:
**02.01.92 Bulletin 92/01**

(45) Publication of the grant of the patent:
**26.10.94 Bulletin 94/43**

(84) Designated Contracting States:
**BE DE ES FR GB IT SE**

(56) References cited:
**EP-A- 63 038**
**EP-A- 0 365 338**
**DE-A- 3 638 527**
**DE-C- 144 450**
**US-A- 4 754 727**

**Patent Abstracts of Japan, vol. 9, no. 3 (M-349) (1726) 09 January 1985 & JP-A-59 153908 (YUKIO) 01 September 1984**

(73) Proprietor: **FORD MOTOR COMPANY LIMITED**
**Eagle Way**
**Brentwood Essex CM13 3BW (GB)**
(84) Designated Contracting States:
**BE GB IT SE**

(73) Proprietor: **FORD MOTOR COMPANY**
**County of Wayne**
**Dearborn, MI 48120 (US)**
(84) Designated Contracting States:
**ES**

(73) Proprietor: **FORD-WERKE AKTIENGESELL-SCHAFT**

**D-50725 Köln (DE)**
(84) Designated Contracting States:
**DE**

(73) Proprietor: **FORD FRANCE S. A.**
**B.P. 307**
**F-92506 Rueil-Malmaison Cédex (FR)**
(84) Designated Contracting States:
**FR**

Rank Xerox (UK) Business Services
(3.10/3.09/3.3.3)

(72) Inventor: **MA, Thomas, Tsoi-Hei**
**1 Collingwood Road**
**South Woodham Ferrers**
**Essex CM3 5YB (GB)**

(74) Representative: **Messulam, Alec Moses et al**
**A. Messulam & Co.**
**24 Broadway**
**Leigh on Sea Essex SS9 1BN (GB)**

# EP 0 463 023 B1

**Description**

The invention relates to a phase change mechanism for varying the phase of a driven member relative to a drive member. The invention can be used for the camshaft of an internal combustion engine for varying the relative phase of opening and closing of the inlet and exhaust valves in a dual overhead camshaft internal combustion engine.

The optimum times for opening and closing the inlet and exhaust valves in an internal combustion engine vary with operating parameters such as engine load and speed. In any engine with fixed angles for opening and closing the valves for all engine operating conditions, the valve timing is a compromise which detracts from the engine efficiency in all but a limited range of operating conditions. For this reason, control systems have been proposed which vary the valve timing during engine operation.

Most of the prior art proposals employ a linear actuator to set the desired phase shift and they rely on converting the linear movement of the actuator into a rotary movement of the camshaft relative to its drive pulley or gear. One such example has been to include a helical gear on the camshaft and to move the helical gear axially to cause the phase of the camshaft to change.

Phase change mechanisms which convert linear actuation movement into an angular phase shift have certain disadvantages which have prevented their being generally adopted in engine designs intended for mass production. Their space requirements are difficult to satisfy and even more serious problems are presented by the cost, complexity and size of the linear actuating system which they require.

Most previous attempts at actuation have required an external power source. Amongst the proposed sources of force for actuating the phase change mechanism have been electro-mechanical actuators (motors or solenoids), or hydraulic actuators. One complexity resulting from such designs is that supplying current or hydraulic fluid to a rotating actuator is troublesome. If the prime mover is stationarily mounted, then this problem is avoided but creates a new problem in how to couple the force from the prime mover to the phase change mechanism. All such proposals also involve friction losses, exacerbate the packaging problem and add to the manufacturing cost.

US 4,754,727 describes a phase change mechanism for a camshaft of an internal combustion engine, comprising a drive member to be connected to the camshaft drive, a driven member to be connected to the camshaft, an inertial member rotatable about the same axis as the drive and driven members, a coupling element connected by connecting means to the drive and driven members, rotation of the inertial member relative to the drive and driven members being operative to move the coupling element so as to bring about a change in phase between the drive and the driven members, and means for applying a torque to the inertial member to vary the speed of rotation of the inertial member relative to the drive and driven members.

In this prior art patent, in common with the Applicants' own application EP-A-0 365 338 (prior art under Art. 54.3 EPC), the actuating system uses a brake acting on a reaction member to bring about a phase change. Thus, whereas most prior art attempts at adjusting the position of the actuator have employed external active sources of power, the latter US patent relies on the use of the rotation of the phase change mechanism to bring about the desired operation of the actuator, the only external force required being friction.

The mechanisms in US-A-4,754, 727 and EP-A-0 365 388 enable continuous control of the phase change over a large range and though this is required for some complex applications, in simpler applications a two position control is quite adequate.

The present invention seeks to provide a phase change mechanism, which can be controlled by an actuating system and allows two position control to be achieved simply and inexpensively.

According to the present invention, there is provided a phase change mechanism for a camshaft of an internal combustion engine, as hereinafter set forth in Claim 1.

The phase change mechanism of the invention differs from that in US-A-4,754,727 in that an eccentric crank is rotatable with the inertial member, the coupling element is journalled about the eccentric and oscillates between two end positions in response to continuous rotation of the eccentric crank in the same direction, and means are provided for arresting the inertial member and the eccentric crank in two predetermined angular positions relative to the coupling element corresponding to predetermined relative phases of the drive and driven members, continued rotation of the eccentric in the same direction relative to the coupling element being operative to switch alternately from each phase to the other.

In one embodiment of the invention, the inertial member is a reaction member and the means for applying a torque to the reaction member comprises braking means for braking the reaction member.

In this case, if no external torque is applied to the reaction member, there will be a torque reaction resulting from the resistance of the valve train tending to act on the cranking means and the magnitude of

3

the torque will depend upon the angular position of the cranking means. However, when the cranking means, the coupling element and the axis of rotation of the drive and driven members all lie in a straight line, there will be no torque reaction. The end positions are stable because only a small torque reaction is experienced by the reaction member in these positions of the cranking means.

A detent engageable by a suitably stiff spring would suffice to hold the reaction member in either of these two stable positions. In both these positions, the phase change mechanism will be solid and will introduce no free play into the camshaft drive train.

An important advantage of the mechanism is that as the reaction member is rotated in the same direction, the phase change will cycle between its two stable positions. Consequently, separate actuators are not required for advancing and retarding the phase.

Electrical, magnetic, mechanical, optical or other sensing means may be provided to determine when the reaction member is in one of the stable positions and which of the two stable positions. A brake band associated with the reaction member can then be operated until such time as it is determined that the phase change mechanism has reached the desired stable position.

In a further development of the invention, the reaction member may be coupled to the drive member by way of a one-way clutch, or ratchet mechanism, which permits rotation of the reaction member in only one direction relative to the drive member. Because of the torque reversals experienced by the drive member when driving a camshaft, the effect of the one-way clutch, or ratchet mechanism, is that once the cranking means has been moved by the reaction member out of one of the stable positions, it will be moved incrementally by the torque reaction until it reaches the other stable position, whereupon no further torque will be applied to it.

This permits further simplification of the control mechanism in that the brake need only be applied for long enough to move the cranking means out of its stable position and the duration of actuation is not critical in that the cranking means will always continue to move until it reaches the other stable position before coming to a stop.

It has been assumed above that the torque reaction from a one way clutch is small in the stable end position but it need not be negligible. On the contrary, in a further simplification of the invention, use may be made of this residual torque to initiate movement without using a brake band. In this case, an inertial member is used in place of the reaction member and cooperates with retractable latching means which positively lock the inertial member in each stable position. Once a latch is released, the inertial member automatically moves towards the other stable position.

The invention will now be described further, by way of example, with reference to the accompanying drawings, in which:

Fig. 1 is a longitudinal schematic section through a phase change mechanism of the invention taken along the line I-I in Fig. 3,

Fig. 2 is a similar longitudinal schematic section taken along the line II-II in Fig. 3,

Fig. 3 is a transverse section taken along the line III- III in Fig. 1,

Fig. 4 is a longitudinal schematic section through an alternative phase change mechanism of the invention,

Fig. 5 is a schematic partial section through the embodiment of Figure 4 taken along the line V-V to demonstrate all the elements of the linkage between the drive and driven members,

Fig. 6 is an axial section similar to that of Fig. 4 through a further phase change mechanism of the invention,

Fig. 7 is a schematic partial section similar to that of Figure 5 through the embodiment of Figure 6 to demonstrate all the elements of the linkage between the drive and driven members, and

Fig. 8 is a further section similar to that of Fig. 4 through a yet another phase change mechanism of the invention,

Detailed Description of the Preferred Embodiments

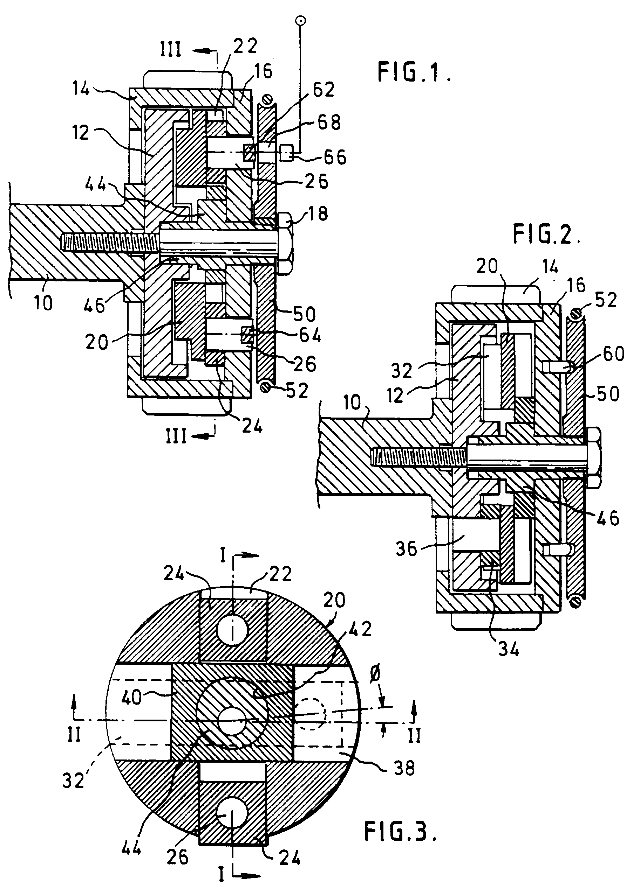

Referring first to Figures 1 to 3, a camshaft 10 has mounted on its end the back plate 12 or driven member of a phase change mechanism. A cog 14 is journalled about the back plate 12 and is connected to a front cover plate 16 which acts as the drive member of the phase change mechanism. The camshaft 10 is concentric with both the front plate 16 and the back plate 12 of the phase change mechanism but is rotationally fixed only with the back plate 12.

A coupling element in the form of a disc 20 is sandwiched between the front plate 16 and the back plate 12 and is coupled to both of these in order to transmit torque from the front plate 16 to the back plate 12. On its side facing the front plate 16, the coupling disc 20 has a guide groove 22 in which two slide blocks 24 are received. The slide blocks 24 are in turn connected to pins 26 which are fixed to the front plate. In this way, torque can be transmitted from the front plate 16 to the coupling disc 20 but the latter may move into an eccentric position relative to the rotational axis of the camshaft 10 along the slide axis of the guide groove 22.

A similar arrangement connects the coupling disc 20 to the back plate 12. The side of the coupling disc 20 facing the back plate 12 is formed with a second guide groove 32 which receives a single slide block 34 rotatably connected by a pin 36 to the back plate 12. The two grooves 22 and 32 in the coupling disc 20 are transverse to one another and preferably mutually orthogonal. The single slide block 34 acts as a crank connecting the coupling disc 20 for rotation with the back plate but permitting both displacement of the coupling disc 20 to an off-centre position and slight rotation of the coupling disc relative to the back plate 12.

If the coupling disc 20 is moved by some external agency along the slide axis of the groove 22 (see Figure 3), it will act on the pin 36 to crank the camshaft, causing a phase change to be introduced between the front and back plates 16 and 12. The angle of phase shift about the camshaft axis is designated by $\phi$ in the drawing and is given by the equation:

$$\tan \phi = \frac{\text{vertical displacement}}{\text{crank radius}}$$

To enable the coupling disc to be moved along the groove 22, a second groove 38 is formed in the side of the coupling disc 20 facing the front plate 16 and extending at right angles to the groove 22. A large slide block 40 is arranged in the groove 38 and is formed with a cylindrical aperture 42 within which there is received an eccentric circular cam 44 formed integrally with a hollow shaft 46 journalled at its ends in the front and back plates 16 and 12.

A reaction member in the form of a braking disc 50 associated with a brake band 52 is keyed onto the end of the hollow shaft 46 and a bolt 18 passing through the centre of the hollow shaft 46 serves to retain the braking disc on the hollow shaft and to secure the phase change mechanism to the camshaft 10.

In the absence of the application of a braking force to the disc 50 the only forces acting on the coupling disc 20 are the reaction torque resulting from the resistance of the valve train. This torque is totally resisted in the two positions in which the lobe of the cam 44 is aligned with the axis of the groove 22. These two are therefore stable positions when negligible effort is required to retain the coupling disc stationary in relation to the front and back plates 16 and 12. Spring biased detents 60 shown in Figure 2 serve to locate the braking disc 50, which is fixed relative to the cam 44, in these two positions.

Having now defined a mechanism with only two stable angles of relative phase shift, it remains only to describe how one or other of these two positions may be selected.

In order to bring about a change in the phase of operation of a camshaft, the latter must be rotated and the torque required to bring about a rapid change in phase is quite considerable. In the described embodiment, the necessary torque for causing the shift in phase is derived from the rotation of the camshaft itself. A braking force is applied to the braking disc 50 by the brake band 52 (a brake calliper may alternatively be employed). This causes the disc 50 to slow down relative to the phase change mechanism and thus rotates the cam 44 to move the coupling disc. On reaching the new stable position, the brake is released and once again all the components of the phase change mechanism rotate in unison. If full braking is applied, the entire phase change can be brought about in one half of a rotation of the camshaft but a more gradual and better controlled change-over takes place if the disc 50 is braked more gently.

It can be seen that continuous rotation of the cam 44 in the same direction will result in the phase being cyclically advanced and retarded. There is no requirement for reversal of the direction of relative motion of the braking disc and continued braking will achieve both advance and retard of the phase angle.

Any of a variety of means may be used to determine the prevailing setting of the phase angle, to permit feedback for the control of the braking. In the embodiment illustrated, two magnets 62 and 64 of opposite polarity are fitted to the pins 26 and a hole 68 in the braking disc 50 allows a sensor 66 to determine the polarity of the magnets align with the hole. Of course, electrical contacts or other forms of transducer may be used to achieve the same result.

The phase change mechanism is a bistable device with the same operation required for switching from either state to the other. The change operation requires the application of a braking force to the brake disc

5

and removal of the braking force when the other stable state has been detected.

The total amount of phase change, corresponding to twice the angle $\phi$ in the drawing, depends on the cranking radius of pin 36 and on the eccentricity of the cam 44. The former parameter cannot readily be changed and in any event contributes relatively little to the phase angle.

On the other hand, it is a relatively simple matter to substitute for the cam 44 one with different eccentricity and this allows considerable economies in production to be achieved since the only component that needs to be changed in the phase change mechanism to permit it to suit a wide range of applications is the cam 44.

Because of the resemblance between the phase change mechanism and a so-called Oldham coupling, it is inherently tolerant of misalignment between the various rotating components. The tolerance in the manufacture of the individual components is not critical and for smooth quiet operation, it is only important that the various slide blocks should fit their respective grooves with accuracy. Even there, because of the little relative movement that occurs in use, nylon bearing surfaces may be used to achieve long term reliability.

As described above, the phase change mechanism is mounted on the end of the camshaft, but it is alternatively possible for it to be mounted on the crankshaft. In this case, the phase of both camshafts would be altered at the same time. This may be desirable for certain applications, such as control of exhaust gas recirculation.

It is further possible to provide phase change mechanisms both on the camshafts and the crankshaft to afford a greater degree of control.

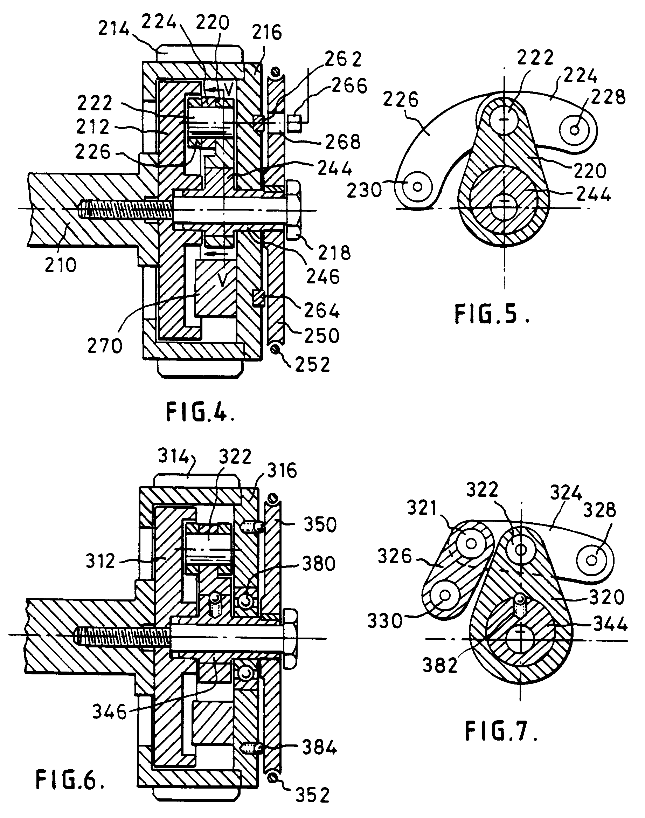

Turning now to Figures 4 and 5, these show an embodiment in which a pair of pivoting links 224, 226 is substituted for the arrangement Oldham type of coupling employed in the previously described embodiment.

The arrangement of the camshaft 210, the back plate 212 the cog 214 is the same as in the embodiment of Figure 1 and will not be described again in detail.

A coupling element in the form of a cranking arm 220 is sandwiched between the front plate 216 and the back plate 212. In order to transmit torque from the drive member to the driven member, the coupling element 220 has a pin 222 on which are pivoted the two links 224 and 226. The link 224 is pivoted at its other end about a pin 228 fixed to the front plate 216 and the link 226 is pivoted at its other end about a pin 230 which is fixed to the back plate 212.

If the coupling element 220 is moved so that the pin 222 follows an arc centred on the pin 228 it will carry with it the link 226 and thereby cause the back plate 212 to rotate relative to the front plate 216. Put differently, the separation of the pins 228 and 230, and therefore the phase of the input member relative to the output member will depend on the position of the pin 222 in relation to the line joining the centres of the pins 228 and 230.

To enable the pin 222 to move along a displacement line transverse to the line joining the centres of the two pins 228 and 230, an arrangement similar to that described with reference to Figure 1 is employed. This arrangement includes an eccentric crank 244 formed on a hollow shaft 246 associated with a braking disc 250 and a brake band 252. To avoid repetition, the same reference numerals have been employed but prefixed by a "2".

As earlier described, when no braking force is applied to the disc 250 the only forces acting on the coupling element 220 are the reaction force resulting from the resistance of the valve train. This force is totally resisted in the two positions in which the lobe of the cam 244 lies on the line joining the pin 222 to the centre or rotation of the phase change mechanism. By correct choice of geometry it is possible to ensure that two stable positions will exist when negligible effort is required to retain the coupling element stationary in relation to the front and back plates 216 and 212. Spring biased detents (not shown) serve to locate the braking disc 250, which is fixed relative to the cam 244, in these two positions.

The total amount of phase change in this embodiment depends on the geometry of the linkage and the eccentricity of the cam 244. By a relatively simple change in the length of the links 224, 226 and/or the eccentricity of the cam 244 the amount of phase change can be selected at will. This again allows economies in production to be achieved since only a few components need to be changed in the phase change mechanism to permit it to suit a wide range of applications.

The mechanism described is inherently tolerant of misalignment between the various rotating components. The tolerance in the manufacture of the individual components is not critical and for smooth quiet operation, it is only important that the various pins should be properly journalled.

It is an advantage of the embodiment shown in Figures 4 and 5 that little change in the moment of inertia of the phase change mechanism occurs in the different positions of the linkage. Consequently, a fixed balanced mass, such as shown at 270 in Figure 1, can be used to balance the mechanism so as to avoid it introducing any vibration. If desired, a movable balance mass may be employed mounted for movement by a cam of the opposite phase to the cam 244 but it is not believed that this level of complexity will be justified.

The embodiment of Figures 6 and 7 is a development of that described in Figures 4 and 5 and only important differences between the embodiments will be discussed. The reference numerals in Figures 6 and 7 have been prefixed by a "3" instead of a "2" in respect of components serving the same or an analogous function.

As best shown in Figure 7, the geometry of the linkage comprising the links 326 and 324 is different from that of Figure 5. The links 224 and 226 in Figure 5 lie in different planes from one another and from the plane of the link 326. This results in a twisting moment being applied to the pin 222. In Figure 7, the link 326 lies in the same plane as the crank arm 320 and the link 324 consists of two parallel limbs straddling the crank arm 320 and the link 326. The forces acting on the pins 321 and 322 are therefore symmetrical about the plane of the crank arm 320.

The use of two pins 322 and 321 in the place of the pin 222 also results in a mechanical advantage permitting larger phase shifts to be achieved and it is possible to vary the total amount of phase change without even changing the cam 344.

Instead of the hollow shaft 246 being journalled in the plate 216, in Figure 6 a one way clutch, also known as an over-running clutch, is disposed between the hollow shaft 346 and the plate 316. When the lobe of the cam 344 is not aligned with the pin 322, the crank arm 320 will be subjected, as earlier described, to a torque reaction tending to make it turn. The torque reaction undergoes reversal but if a one way clutch is incorporated in the manner described the effect of the torque reaction will always be to turn the crank arm 320 in the same direction.

The use of a one way clutch 380, or an equivalent ratchet mechanism, permits the control system of the phase change mechanism to be simplified since all that is now required of the brake band is to move the crank arm 320 out of its stable position sufficiently to experience a torque reaction, and thereafter this reaction will operate to move the phase change mechanism to its other stable position where it will remain until reactivated. The control system need no longer include means for providing positional feedback but detents may be needed to lock the crank arm 320 in its stable positions. To this end, spring biased detents 382 and 384 may act on the hollow shaft 346 and on the brake disc 350 to locate the crank arm 320 securely until the brake band 352 is operated.

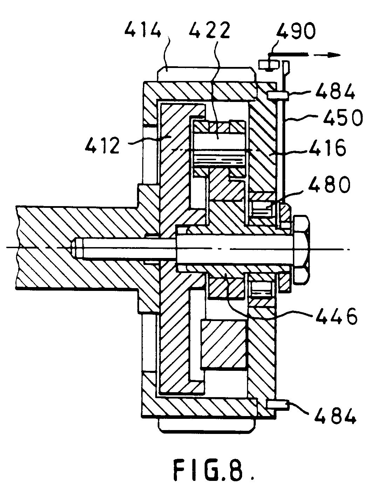

The embodiment of Figure 8 is a modification of that described in Figures 6 and 7. The reference numerals in Figures 6 and 7 have been prefixed by a "4" instead of a "3" in respect of components serving the same or an analogous function.

The essential difference in the embodiment of Figure 8 is that braking means have been omitted altogether and reliance is instead made on the one-way clutch to initiate movement of the inertial member 450. In place of detents 384, there are now releasable latching means formed by pins 484 on the drive member 416 co-operating with holes in the inertial member 450.

The member 450 is in this case resilient and requires the application of an external force to release it from the pin 484. As illustrated, a solenoid actuated roller 490 leans on the surface of the resilient inertial member 450 and when it is desired to disengage the latch, the solenoid is energised to raise the resilient inertial member 450 off the pin 484 when next the pin 484 is aligned with the roller 490.

**Claims**

1. A phase change mechanism for a camshaft of an internal combustion engine, comprising
   a drive member (14, 214, 31) to be connected to the camshaft drive,
   a driven member (12, 212, 312) to be connected to the camshaft,
   an inertial member (50, 250, 350) rotatable about the same axis as the drive and driven members,
   a coupling element (20, 220, 320) connected by connecting means (24,26; 224,226; 324,326) to the drive and driven members, rotation of the inertial member relative to the drive and driven members being operative to move the coupling element so as to bring about a change in phase between the drive and the driven members, and
   means (52) for applying a torque to the inertial member to vary the speed of rotation of the inertial member relative to the drive and driven members,
   characterised in that
   an eccentric crank (44, 244, 344) is rotatable with the inertial member,
   the coupling element is journalled about the eccentric and oscillates between two end positions in response to continuous rotation of the eccentric crank in the same direction, and

EP 0 463 023 B1

means (60) are provided for arresting the inertial member and the eccentric crank in two predetermined angular positions relative to the coupling element corresponding to predetermined relative phases of the drive and driven members, continued rotation of the eccentric in the same direction relative to the coupling element being operative to switch alternately from each phase to the other.

2. A phase change mechanism as claimed in claim 1, wherein the inertial member is a reaction member 50, 250, 350 and the means for applying a torque to the reaction member comprises braking means 52, 252, 352 for braking the reaction member.

3. A phase change mechanism as claimed in claim 2, wherein the means for arresting the reaction member in said predetermined angular positions comprise detents.

4. A phase change mechanism as claimed in claim 3, further comprising sensing means for determining the position of the coupling element relative to the drive and driven members.

5. A phase change mechanism as claimed in claim 4, wherein the sensing means forms part of a control loop for releasing the braking force applied to the reaction member when the coupling element is near one of said predetermined positions.

6. A phase change mechanism as claimed in Claim 2 or 3, wherein the reaction member is coupled to the drive member by way of a mechanism which permits rotation of the reaction member in only one direction relative to the drive member.

7. A phase change mechanism as claimed in Claim 1, wherein the coupling element is in the form of a disc connected to the drive and driven members in a manner which permits the disc to slide laterally relative to both the drive and driven members.

8. A phase change mechanism as claimed in Claim 1, wherein the coupling element is a crank arm connected by pivotable links to the drive and driven members.

9. A phase change mechanism as claimed in claim 1, wherein the means for applying a torque to the inertial member comprises a one-way clutch (480) transmitting torque to the inertial member (450) in only one direction from torque fluctuations occurring naturally in the drive train.

10. A phase change mechanism as claimed in claim 9, wherein the inertial member (450) is resiliently biased and cooperates with pins (484) to lock the inertial member in each of the two stable end positions, and wherein means are provided for releasing the latching between the inertial member (450) and the pins (484) to permit the inertial member to be driven by the one-way clutch mechanism towards the other stable position.

11. An internal combustion engine having two camshafts for controlling intake and exhaust valves of the engine and a phase change mechanism as claimed in Claim 1 connected to at least one of the two camshafts for varying the rotational phase of the respective camshaft relative to that of the engine crankshaft so as to vary the crankshaft angle at which valves operated by the respective camshaft open and close.

**Patentansprüche**

1. Phasenverschiebungsmechanismus für die Nockenwelle einer Brennkraftmaschine, mit
   einem mit dem Nockenwellenantrieb verbindbaren treibenden Glied (14, 214, 31),
   einem mit der Nockenwelle verbindbaren getriebenen Glied (12, 212, 312),
   einem um die gleiche Achse wie das treibende und das getriebene Glied drehbaren Trägheitsglied (50, 250, 350),
   einem Kupplungselement (20, 220, 320), das über Koppelmittel (24, 26; 224, 226; 324, 326) mit dem treibenden und dem getriebenen Glied gekoppelt ist, wobei die Drehung des Trägheitsgliedes relativ zu dem treibenden und dem getriebenen Glied das Kupplungselement derart bewegend wirkt, daß eine Änderung des Phasenverhältnisses zwischen dem treibenden und dem getriebenen Glied

8

herbeigeführt wird, und mit

Mitteln (52) zum Aufbringen eines Drehmomentes auf das Trägheitsglied derart, daß die Drehgeschwindigkeit des Trägheitsgliedes relativ zu dem treibenden und dem getriebenen Glied verändert wird,

dadurch gekennzeichnet, daß

eine Exzenterkurbel (44, 244, 344) mit dem Trägheitsglied drehbar ist,

das Kupplungselement um den Exzenter drehbar gelagert ist und in Reaktion auf eine kontinuierliche Drehung der Exzenterkurbel in der gleichen Richtung zwischen zwei Endstellungen verschwenkbar ist, und daß

Mittel (60) vorgesehen sind zur Arretierung des Trägheitsgliedes und der Exzenterkurbel in zwei vorbestimmten Winkellagen relativ zum Kupplungselement, welche vorbestimmten relativen Phasenverhältnissen zwischen treibendem und getriebenem Glied entsprechen, wobei eine kontinuierliche Drehung des Exzenters in der gleichen Richtung relativ zum Kupplungselement eine abwechselnde Umschaltung von der einen Phase in die andere bewirkt.

2. Phasenverschiebungsmechanismus nach Anspruch 1, worin das Trägheitsglied ein Reaktionsglied (50, 250, 350) ist und die Mittel zum Aufbringen eines Drehmoments auf das Reaktionsglied Bremsmittel (52, 252, 352) zum Abbremsen des Reaktionsgliedes aufweisen.

3. Phasenverschiebungsmechanismus nach Anspruch 2, worin die Mittel zur Arretierung des Reaktionsgliedes in den besagten vorbestimmten Winkellagen Rastvorrichtungen aufweisen.

4. Phasenverschiebungsmechanismus nach Anspruch 3, außerdem Gebermittel zur Bestimmung der Lage des Kupplungselementes relativ zu dem treibenden und dem getriebenen Glied aufweisend.

5. Phasenverschiebungsmechanismus nach Anspruch 4, worin die Gebermittel Teil eines Steuerkreises sind, der die auf das Reaktionsglied aufgebrachte Bremskraft löst, wenn sich das Kupplungselement in der Nähe einer der besagten vorbestimmten Lagen befindet.

6. Phasenverschiebungsmechanismus nach Anspruch 2 oder 3, worin das Reaktionsglied mit dem treibenden Glied mittels eines Mechanismus gekoppelt ist, der eine Drehung des Reaktionsgliedes relativ zum treibenden Glied nur in einer Richtung zuläßt.

7. Phasenverschiebungsmechanismus nach Anspruch 1, worin das Kupplungselement in Form einer Scheibe ausgebildet ist, die mit dem treibenden und dem getriebenen Glied in einer Art und Weise gekoppelt ist, die ein seitliches Verschieben der Scheibe relativ zu dem treibenden wie auch zu dem getriebenen Glied erlaubt.

8. Phasenverschiebungsmechanismus nach Anspruch 1, worin das Kupplungsglied ein Kurbelarm ist, der über schwenkbare Koppelglieder mit dem treibenden und mit dem getriebenen Glied verbunden ist.

9. Phasenverschiebungsmechanismus nach Anspruch 1, worin die Mittel zum Aufbringen eines Drehmoments auf das Trägheitsglied eine Einwegkupplung (480) aufweisen, welche nur in einer Richtung Drehmoment, das aus den natürlichen im Antriebsstrang auftretenden Drehmomentschwankungen entsteht, auf das Trägheitsglied (450) überträgt.

10. Phasenverschiebungsmechanismus nach Anspruch 9, worin das Trägheitsglied (450) federnd beaufschlagt wird und mit Stiften (484) zusammenwirkt, um das Trägheitsglied in jeder der beiden stabilen Endlagen zu verriegeln, und worin Mittel zum Lösen der Verriegelung zwischen dem Trägheitsglied (450) und den Stiften (484) vorgesehen sind, so daß das Trägheitsglied von der Einwegkupplungsvorrichtung in die andere stabile Endlage bewegt werden kann.

11. Brennkraftmaschine mit zwei Nockenwellen zur Steuerung der Einlaß- und Auslaßventile des Motors und mit einem mit wenigstens einer der beiden Nockenwellen verbundenen Phasenverschiebungsmechanismus nach Anspruch 1 zur Veränderung der Drehphase der entsprechenden Nockenwelle relativ zu derjenigen der Motorkurbelwelle, so daß sich der Kurbelwellenwinkel ändert, bei dem die von der jeweiligen Nockenwelle betätigten Ventile öffnen und schließen.

**Revendications**

1. Mécanisme de variation de phase pour un arbre à cames de moteur à combustion interne, comprenant un élément d'entraînement (14, 214, 31) devant être relié à la commande de distribution, un élément entraîné (12, 212, 321) devant être relié à l'arbre à cames, un élément inertiel (50, 250, 350) pouvant tourner autour du même axe que les éléments entraîné et d'entraînement, un élément de couplage (20, 220, 320) reliés par des moyens de raccordement (24, 26 ; 224, 226 ; 324, 326) aux éléments entraîné et d'entraînement, la rotation de l'élément inertiel par rapport aux éléments entraîné et d'entraînement servant à déplacer l'élément de couplage de manière à amener une variation de phase entre les éléments entraîné et d'entraînement, et des moyens (52) destinés à appliquer un couple à l'élément inertiel afin de varier la vitesse de rotation de l'élément inertiel par rapport aux éléments entraîné et d'entraînement, caractérisé en ce que une bielle excentrique (44, 244, 344) peut tourner avec l'élément inertiel, l'élément de couplage est tourillonné autour de l'excentrique et oscille entre deux positions terminales en réponse à la rotation continue de la bielle excentrique dans la même direction, et en ce que des moyens (60) sont fournis pour arrêter l'élément inertiel et la bielle excentrique dans deux positions angulaires prédéterminées par rapport à l'élément de couplage correspondant à des phases relatives prédéterminées des éléments entraîné et d'entraînement, la rotation continue de l'excentrique dans le même sens par rapport à l'élément de couplage servant à passer alternativement d'une phase à l'autre.

2. Mécanisme de variation de phase selon la revendication 1, dans lequel l'élément inertiel est un élément de réaction (50, 250, 350) et les moyens destinés à appliquer un couple à l'élément de réaction comprennent des moyens de freinage (52, 252, 352) destinés à freiner l'élément de réaction.

3. Mécanisme de variation de phase selon la revendication 2, dans lequel les moyens destinés à arrêter l'élément de réaction dans lesdites positions angulaires prédéterminées comprennent des positionneurs.

4. Mécanisme de variation de phase selon la revendication 3, comprenant également des moyens de détection destinés à déterminer la position de l'élément de couplage par rapport aux éléments entraîné et d'entraînement.

5. Mécanisme de variation de phase selon la revendication 4, dans lequel les moyens de détection font partie d'un circuit de réglage destiné à relâcher la force de freinage appliquée à l'élément de réaction lorsque l'élément de couplage est à proximité de l'une desdites positions prédéterminées.

6. Mécanisme de variation de phase selon la revendication 2 ou 3, dans lequel l'élément de réaction est couplé à l'élément d'entraînement au moyen d'un mécanisme qui permet la rotation de l'élément de réaction dans un seul sens par rapport à l'élément d'entraînement.

7. Mécanisme de variation de phase selon la revendication 1, dans lequel l'élément de couplage a la forme d'un disque relié aux élément entraîné et d'entraînement, d'une manière qui permet au disque de coulisser latéralement par rapport aux deux éléments entraîné et d'entraînement.

8. Mécanisme de variation de phase selon la revendication 1, dans lequel l'élément de couplage est un bras de manivelle relié par des raccords pivotants aux éléments entraîné et d'entraînement.

9. Mécanisme de variation de phase selon la revendication 1, dans lequel les moyens destinés à appliquer un couple à l'élément inertiel comprennent un embrayage unidirectionnel (480) transmettant le couple à l'élément inertiel (450) dans un seul sens depuis des fluctuations de couple se produisant naturellement dans le dispositif de commande des soupapes.

10. Mécanisme de variation de phase selon la revendication 9, dans lequel l'élément inertiel (450) est incliné de manière résiliente et coopère avec les chevilles (484) de manière à verrouiller l'élément inertiel dans chacune des deux positions terminales stables, et dans lequel des moyens sont fournis pour relâcher le verrou entre l'élément inertiel (450) et les chevilles (484) afin de permettre à l'élément inertiel d'être entraîné par le mécanisme à embrayage unidirectionnel vers l'autre position stable.

**11.** Moteur à combustion interne présentant deux arbres à cames destinés à commander les soupapes d'admission et d'échappement du moteur et un mécanisme de variation de phase selon la revendication 1 relié à au moins l'un des deux arbres à cames afin de varier la phase de rotation de l'arbre à cames respectif par rapport à celui du vilebrequin du moteur, de manière à varier l'angle du vilebrequin auquel les soupapes actionnées par l'arbre à cames respectif s'ouvrent et se ferment.

FIG.1.

FIG.2.

FIG.3.

FIG.4.

FIG.5.

FIG.6.

FIG.7.

13

FIG.8.